# EUROPEAN PATENT SPECIFICATION

(11) **EP 1 294 644 B1**
(45) Date of publication and mention of the grant of the patent: **14.07.2010**
(21) Application number: 01946639.0
(22) Date of filing: 21.06.2001
(51) Int. Cl.: C02F 1/56, C02F 1/52, C02F 1/00

(54) **WATER TREATMENT COMPOSITIONS**
MITTEL ZUR WASSERBEHANDLUNG
COMPOSITION DE TRAITEMENT DES EAUX

(30) Priority: 27.06.2000 GB 0015571; 27.06.2000 GB 0015569; 08.11.2000 GB 0027214
(43) Date of publication of application: 26.03.2003
(73) Proprietor: THE PROCTER & GAMBLE COMPANY, Cincinnati, OH 45202 (US)
(72) Inventor: SOUTER, Philip, Frank, Morpeth, Northumberland NE65 8UP (GB); URE, Colin, Wallsend, Tyne and Wear NE28 9RU (GB)
(74) Representative: Clemo, Nicholas Graham
(86) International application number: PCT/US2001/019879
(87) International publication number: WO 2002/000557

(56) References cited:
- WO-A-00/27759
- WO-A-95/33690
- US-A- 5 023 012
- US-A- 5 681 475

## Description

### FIELD OF THE INVENTION

The present invention relates to compositions, methods and kits for use in the purification of contaminated drinking water for purposes of rendering it potable. The compositions and kits are especially designed for personal or domestic use in the batchwise purification and clarification of relatively small predetermined volumes of contaminated drinking water. The compositions and kits are also designed for personal or domestic use in the purification and nutrification of contaminated drinking water

### BACKGROUND TO THE INVENTION

There is a need for potable water in all areas of the world. In developed countries, water is purified and potable water is supplied on a large scale, typically by large national or multinational water management companies. This water is typically supplied directly to the consumers homes in a potable form. However, in some parts of the world, for example in some rural areas of developing countries, many people either do not have a direct water supply to their homes and only have access to a non-potable communal water supply such as a village well, or cannot be guaranteed that the water they do receive is potable. As a result, considerable numbers of people die each year as the direct result of drinking contaminated drinking water. Thus, there is a need for water purification kits and compositions that allow the consumer to purify their own water, which produces potable water in a fast and efficient manner.

Current water purification compositions available on the market to date, consist mainly of disinfectants, e.g. sources of chlorine and/or iodine, and do not adequately purify water. Water which is obtained after treatment by these water purification kits, may still comprise amounts of water impurities, e.g. heavy metal ions such as arsenic, which, when continually consumed for a prolonged period of time, may lead to health problems. Thus, there is a need to provide a water purification composition which removes water-impurities like heavy metal ions including arsenic and lead, more efficiently and effectively than current water purification kits.

It has now been found that water purification compositions based on certain combinations of inorganic coagulants and water-soluble or water-dispersible polymers remove greater amounts of water impurities, such as heavy metals, from water compared to current water purification compositions.

Also, current water purification compositions do not adequately remove, kill or inactive micro-organisms such as bacteria, viruses and cysts, which are present in the water. Thus, there remains a need to provide a water purification composition which does adequately remove, kill or inactive these micro-organisms.

It has now been found that when the composition of the present invention comprises a disinfecting agent, the composition removes, kills or inactivates a surprisingly larger amount of micro-organisms such as bacteria, viruses and cysts compared to water purification compositions known in the art.

In addition, the water which is to be purified by a water purification composition typically comprises a large amount of water-soluble organic content such as humic acid. With current water purification compositions, bleach, especially chlorine based bleach, can react with the water-soluble organic content and produce by-products in the water, including chlorine derivatives such as chloroacetic acid or chloroform, which are harmful to human and animal health. Thus, there is a need to provide water purification compositions, methods and kits which produce purified water comprising a low amount of disinfection by-products.

Another problem associated with the use of certain chlorine-based disinfectants such as calcium hypochlorite is that of product stability. In particular, it has been found that known compositions based on calcium hypochlorite can lose substantial disinfection efficacy under regular conditions of storage and use. Thus, there is a need for purification and disinfection compositions having improved storage stability.

After purification and disinfection of contaminated drinking water, there raises the further problem of maintaining the purity of the water until such time as it is required for drinking, whilst at the same time providing drinking water of satisfactory taste. Thus there is a need for compositions, methods and kits for purifying contaminated drinking water and which provides purified water having both longer life and improved taste attributes.

In addition to the need for purifying and clarifying contaminated drinking water, there is also a huge need in many parts of the world to improve standards of nutrition and health. The effective provision of both clean water and essential minerals and vitamins would clearly be of universal benefit but especially so in those parts of the world where potable water is in short supply. Thus there is a need for compositions, methods and kits for purifying and at the same time nutrifying contaminated drinking water.

WO 95/33690 relates to flocculating compositions that remove phosphate from waste water, for use in e.g., municipal treatment plants. Its compositions comprise ferric salts, chitosan and an anionic polymer. WO 00/27759 is concerned with products and processes to enable consumers to re-use soiled wash water, for example from laundry washing processes. Its compositions comprise a primary flocculant, which can be a multivalent cation such as iron III or, preferably, aluminum; and a secondary flocculant. Optional ingredients include an alkali source, clays, zeolites and antimicrobial agents.

US 5,681,475 describes unit dose compositions for the purification of water for drinking purposes. Its compositions include an organo-chlorine disinfectant; a trivalent metal ion coagulant, preferably aluminium; a water-soluble alkali source; an anionic, polymeric primary flocculant; and a cationic, polymeric secondary flocculant. This document teaches lower ratios of coagulant to flocculant than those employed in the present invention. US 5,023,012 also describes compositions for purification of drinking water. Its compositions also include a disinfectant; a metal ion coagulant, preferably aluminium; an alkali source; and polymeric primary and secondary flocculants. Exemplified secondary flocculants are anionic or nonionic.

### SUMMARY OF THE INVENTION

The present invention relates to compositions, methods and kits for purifying and/or clarifying contaminated drinking water, as well as to compositions, methods and kits for purifying and nutrifying contaminated drinking water. In general terms, the compositions herein comprise at least a primary coagulant material, a so-called bridging flocculant material, the levels and ratios of coagulant to flocculant falling within certain ranges, a coagulant aid, a microbiocidal disinfectant, a water-soluble alkali, and preferably a water-insoluble silicate (for example a clay, zeolite or mixture thereof), and a food additive or nutrient source.

The compositions herein comprise from 15% to 50%, preferably from 25% to 40% by weight of iron (III) sulgate as the primary coagulant.

The bridging flocculant is polymer or mixture of polymers having a weight average molecular weight of at least 2,000,000, preferably at least 5,000,000 and especially at least 15,000,000, selected from water-soluble and water-dispersible anionic and nonionic polymers and mixtures thereof. The compositions herein comprise from 0.4% to 3%, preferably from 0.5% to 3% by weight of the bridging flocculant.

The term 'coagulant aid' herein refers to a water-soluble or water-dispersible polymer of lower molecular weight than that of the bridging flocculant and which aids the overall aggregation and flocculation process. The coagulant aid for use herein has a weight average molecular weight of less than 1,500,000, preferably less than 750,000 and especially less than 300,000 and mixtures thereof. The compositions herein comprise from 0.5% to 5%, preferably from 1% to 4% by weight of the coagulant aid, which from the viewpoint of delivering excellent heavy metal, total soluble organic and cyst reduction performance is selected from water-soluble and water-dispersible cationic polymers and mixtures thereof, for example cationic polysaccharides of which chitosan is especially preferred. Preferred coagulant aids herein are substantially water-insoluble, having at least 10% by dry total weight of undissolved material as determined by the test described herein below, this being preferred from the viewpoint of providing compositions and methods delivering low total water-soluble organic content.

The weight ratio of primary coagulant to bridging flocculant herein is from 10:1 to 200:1, preferably from 10:1 to 150:1, more preferably from 20:1 to 100:1, and especially from 25:1 to 75:1, these ratios being valuable especially in conjunction with the levels of coagulant and flocculant described herein above for providing optimum purification performance in highly contaminated water conditions and for providing significantly improved rates of filtration and 'non-blocking' filter characteristics as well as excellent final product purity and clarity using paper and non-woven filters. Although the reasons for this improvement in filtration rate, non-blocking characteristics and product clarity are not fully understood, it is believed that higher levels and ratios of the bridging flocculant relative to the coagulant increases the 'stickiness' of the flocs with a consequent reduction in colloidal particulates. Such compositions are also highly suitable for use herein in conjunction with cloth filters.

The filtration characteristics of the composition can be assessed using a standard filtration test and are preferably such that at least one litre of treated model surface water after treatment with 620mg/litre of purification composition passes a Whatman 1.2µm GF/C grade filter in less than 1 hour, preferably less than 45 minutes, and more preferably less than 30 minutes under ambient temperature conditions (20°C) and that at least 1 litre, preferably at least 2 litres, more preferably at least 3 litres of the treated water will pass the filter without blocking.

The model surface water described comprises:
(i) 24mg/l humic acid - source of soluble natural organic matter;
(ii) 20mg/l fine test dust(1-3 µm)- designed to add turbidity;
(iii) 1500mg/l salt - to give stress conditions of high total dissolved solids.

The resultant water has a high organic content (>10mg/l total organic content (TOC)), high colour (>300 platinum cobalt units (PCU)), high turbidity (>15 nephelometric turbidity units (NTU)) and high total dissolved solids (TDS). The pH of the water is near neutral but can also be adjusted to pH 5 or 9 using HCl or NaOH respectively for stress testing. This water is referred to herein as 'model surface water'.

Compositions having optimum purification and clarification performance can also be defined by reference to the weight ratio of the primary coagulant and coagulant aid to the bridging flocculant. Thus, in preferred embodiments, the weight ratio of primary coagulant to coagulant aid is from 8:1 to 100:1, preferably from 12:1 to 30:1, and more preferably from 15:1 to 25:1. The weight ratio of coagulant aid to bridging flocculant, on the other hand, is preferably in the range from 10:1 to 1:6, preferably from 5:1 to 1:3, more preferably from 3:1 to 1:1.

The compositions, methods and kits of the invention also comprise a microbiocidal disinfectant. Although a broad range of microbiocidal disinfectants are envisaged for use herein, preferred is a chlorine-based disinfectant. Calcium hypochlorite is especially preferred. Preferably, the compositions herein comprise primary coagulant and microbiocidal disinfectant in a weight ratio of from 10:1 to 100:1, more preferably from 12:1 to 60:1, and especially from 15:1 to 40:1. The compositions herein comprise from 0.2% to 10%, preferably from 0.5% to 4%, more preferably from 0.7% to 2.5% by weight of the microbiocidal disinfectant.

The compositions, methods and kits of the invention also comprise a water-soluble alkali, this being valuable from the viewpoint of delivering an optimum in-use pH profile. In general terms, the levels of primary coagulant and alkali should be adjusted so as to provide a pH at in-use concentration (generally about 620 ppm of total composition) in the range from about 6.0 to 8.5, but preferably in the range from about 6.0 to 7.0, this being preferred from the viewpoint of providing performance robustness to contaminated waters of differing contamination levels and types. To achieve the requisite pH levels, the weight ratio of primary coagulant to water-soluble alkali is in the range from 0.8:1 to 3:1, preferably from 0.9:1 to 2.4:1, and more preferably from 1:1 to 2:1. Generally, the compositions comprise from 10% to 45%, preferably from 15% to 40%, more preferably from 20% to 35% by weight of the water-soluble alkali.

The compositions, methods and kits of the invention can also include a water-insoluble silicate material such as a clay or zeolite which acts to aid the flocculation process by acting as a seed particle or by promoting absorption or cation exchange of metal ions. In preferred embodiments, the weight ratio of primary coagulant to water-insoluble silicate herein is from 0.3:1 to 5:1, preferably from 0.7:1 to 2:1, and more preferably from 0.8:1 to 1.2:1. Generally, the compositions herein comprise from 10% to 80%, preferably from 20% to 50%, more preferably from 25% to 35% by weight of the water-insoluble silicate.

The compositions and kits herein can utilized in a variety of forms and process types including batch and continuous, but preferably the composition is in unit dosage form and is used in the batchwise purification and clarification of a relatively small predetermined volume of contaminated drinking water. By relatively small volume is meant a volume of water typically required for immediate consumption in domestic or personal use, or which is required for short term storage and consumption. Typically, the compositions herein will be used for treating a volume of contaminated drinking water in the range from about 0.1 to about 100, preferably from about 0.5 to about 40, more preferably from about 5 to about 20 and especially from about 8 to about 13 litres. Unit dosage amounts of the composition, on the other hand, will generally range from about 50 to about 2000, preferably from about 100 to about 1000, more preferably from about 250 to about 750 mg per litre of contaminated drinking water. Unit dosage forms suitable for use herein include tablets, compacts, extrudates, water-soluble single and multi-compartment pouches etc but preferred unit dosage forms are single and multi-compartment sachets comprising a unit dose of granular or powdered composition which is opened prior to use and the contents emptied into a predetermined quantity of contaminated drinking water.

For the above purposes, highly preferred herein is a composition in unit dosage form comprising;
(i) from about 15% to about 50%, preferably from about 25% to about 40% by weight of the primary coagulant;
(ii) from about 0.2% to about 5%, more preferably from about 0.5% to about 3% by weight of the bridging flocculent; and
(iii) from about 0.5% to about 5%, more preferably from about 1% to about 4% by weight of the coagulant aid.

It is also important to ensure that in-use of the compositions, effective levels of the formulation ingredients are delivered to the sample of contaminated water to be purified. Thus the levels of primary coagulant, bridging flocculant and coagulant aid in composition should preferably be sufficient to provide by weight of the contaminated drinking water from about 50 to about 500, preferably from about 75 to about 300, more preferably from about 100 to about 250 ppm of primary coagulant, from about 1 to about 15, preferably from about 2 to about 10, more preferably from about 2.5 to about 7.5 ppm of bridging flocculant, and from about 1 to about 25, preferably from about 5 to about 20, more preferably from about 8 to about 12 ppm of coagulant aid.

In preferred embodiments, the microbiocidal disinfectant is incorporated in the compositions of the invention in a controlled, delayed, sustained or slow release form whereby the disinfectant is released into the drinking water and allowed to react with soluble organic impurities therein only after substantial completion of the coagulation and flocculation stage, this being valuable from the viewpoint of controlling and minimising the level of trihalomethanes (THM) generated during the purification process. A measure of the rate of release of disinfectant herein is t_{max,}, this being the time taken to achieve maximum residual disinfectant concentration after addition of the composition to deionized water at 20°C with gentle stirring. Preferably the compositions herein have a t_{max,} of at least about 1 minute, preferably at least about 2 minutes, more preferably at least about 4 minutes, and especially at least about 8 minutes. The rate of coagulation and flocculation of organic impurities, on the other hand, is measured by the n%-ile soluble organic matter flocculation rate (tₙ). The n%-ile soluble organic matter flocculation rate is defined herein as the time taken for n% reduction in the concentration of humic acid as measured according to the procedure described hereinbelow. Preferably, t₈₀ for the compositions herein is less than about 2 minutes, preferably less than about 1 minute, more preferably less than about 30 seconds. In preferred embodiments, moreover, t₉₀ for the compositions herein is less than about 2 minutes, preferably less than about 1 minute, more preferably less than about 30 seconds.

The n%-ile organic matter flocculation rate is measured on the model surface water described herein above. 620mg of the water-purification composition is added to a 1 litre sample of the model surface water with stirring. Aliquots of the liquid are then taken at 30 second intervals, each aliquot being filtered through a 0.45µm filter. The colour of the aliquot is then measured using for example a Hanna HI93727 colour meter and compared with a set of standards of known humic acid concentration and colour reading. The n%-ile soluble organic matter flocculation rate is the time taken to achieve a colour reading corresponding to a humic acid level which is (100-n)% of that of the initial level (24ppm).

Preferably the final colour achieved (for example post-filtration at 30minutes) using the purification compositions of the invention either in-vivo or on model surface water is less than 20 PCU, more preferably less than 15 PCU and especially less than 10 PCU. The final turbidity achieved using the purification compositions of the invention either in-vivo or on model surface water, on the other hand, is preferably less than 5 NTU, more preferably less than 2 NTU and especially less than 1 NTU, turbidity being measured using a Jenway 6035turbidity meter calibrated daily against a 5.0 NTU standard.

The compositions, methods and kits of the invention also preferably comprise a food additive or nutrient source, this being valuable from the viewpoint of providing drinking water which is not only pure but which also contains essential minerals and other food additives necessary for good health and nutrition. The food additive or nutrient source can be included in the kits of the invention as one or more separate compositions in unlit dosage form, or they can be incorporated directly into the water-purification composition itself.

In the case of food additives and nutrient sources which are non-coagulable or which at least partially survive the coagulation and flocculation process, for example fluoridating agents, iodinating agents, and essential minerals such as zinc and iron, the food additive or flocculent can be incorporated without special measures into the water purification composition. Otherwise, the food additive or nutrient sources can also be incorporated in controlled, delayed, sustained or slow release form as described herein with respect to the disinfectant. In this instance, the composition should have a tₘₐₓ corresponding to the time for achieving maximum nutrient concentration after addition to deionized water at 20°C which is greater than the 80%-ile soluble organic flocculation rate (t₈₀) and preferably greater than the 90%-ile soluble organic flocculation rate (t₉₀) of the composition.

It is also desirable herein to control the free moisture content of the water-purification compositions, especially in those compositions of the invention comprising calcium hypochlorite as microbiocidal disinfectant. It should be understood that many of the ingredients of the compositions herein such as the bentonite clays, alum based coagulants, etc contain a natural amount of free moisture and this has been found to be especially detrimental to calcium hypochlorite stability. In preferred embodiments, therefore, the compositions of the invention should have a free-moisture content of less than 6%, preferably less than 4% and more especially less than 2.5% by weight thereof. It is also highly desirable to incorporate one or more ingredients which are capable of acting as a moisture sink, for example, low-moisture, pre-dried clays and hydratable salts in anhydrous or partly hydrated form whereby the free moisture content of the composition is maintained below the theoretical amount necessary for 100% hydration of the components of the composition. Particularly preferred moisture sinks include pre-dried clays and aluminosilicates, anhydrous sodium carbonate, and mixtures thereof. Preferably the moisture sinks have a free moisture content of less than 4%, more preferably less than 3%, especially less than 2.5% and more especially less than 1.5% by weight. Free moisture content of the product or moisture sink is determined as follows. A 2g sample of the product or moisture sink is extracted into 50 mls of dry methanol at room temperature for 20 mins. A 1 ml aliquot of this solution is then taken and the free moisture determined by a standard Karl Fischer titration. The free moisture is expressed as the percentage weight of water relative to the sample weight (in this case 2g).

The present invention also relates to methods for purifying contaminated drinking water comprising contacting the water with the compositions herein.

The methods of the invention comprise a number of distinct chemical and physical stages which can run either concurrently or in sequence. In broad terms, these stages include
(i) a coagulation and flocculation stage in which the contaminated drinking water is brought into mixing contact with the coagulant, bridging flocculant and, if present, the coagulant aid so as to coagulate and flocculate the water impurities in the form of solid matter;
(ii) a disinfectant stage in which the drinking water is brought into microbiocidal contact with the disinfectant during or after substantial completion of the coagulation and flocculation stage;
(iii) a separation stage prior or subsequent to the disinfectant stage in which the solid matter is physically separated from the drinking water.

In addition, the methods of the invention also preferably include a neutralization stage in which the drinking water is brought into contact with a disinfectant neutralization agent subsequent to said separation stage in order in order to maintain drinking water purity during storage of the drinking water but to reduce or remove excess disinfectant prior to use. In the case of chlorine-based disinfectants, suitable disinfectant neutralization agents include activated carbon and reducing agents such as sodium thiosulfate, sodium sulphite, hydrogen peroxide and sodium percarbonate.

In addition, the methods of the invention also preferably include a nutrifying stage in which the drinking water is brought into contact with the food additive or nutrient source prior or subsequent to the separation stage.

The volume of contaminated drinking water treated according to the methods of the invention is preferably in the range from 0.1 to 100, more preferably from 0.5 to 40, yet more preferably from 5 to 20, and especially from 8 to 13 litres.

Although any convenient method of separating the solid matter from the partially purified drinking water can be utilized, for example, by decanting, sedimentation, flotation, etc, preferably separation is accomplished by filtration in a separation stage using a paper, non-woven or cloth filtration element. Moreover, separation of the solid matter is preferably accomplished in a single filtration step without the need for change of the filtration element. It is a feature of the invention that the compositions and methods have superior filtration characteristics through disposable paper and non-woven filters and such filtration means may be preferred for optimum performance in removing cysts and bacterial contamination. The compositions and methods of the invention also provide superior filtration characteristics through cloth filtration elements made of a hydrophilic substrate such as cotton and such systems may be preferred from the viewpoint of cost and environmental considerations whilst at the same time providing highly effective filtration performance.

The compositions, methods and kits of the invention are particularly valuable in the purification of water which has been contaminated with heavy metals such as arsenic and/or lead and are effective in purifying water to an arsenic concentration below 5 ppb, preferably below 2 ppb and to a lead concentration below 15 ppb, preferably below 10 ppb.

The compositions, methods and kits of the invention are also valuable in the purification of water which has been contaminated with soluble organic impurities such as humic acid and are effective in purifying water to a total organic content below 10 ppm, preferably below 7 ppm and more preferably below 4 ppm and to a trihalomethane (THM) level below 100 ppb, preferably below 70 ppb, more preferably below 40 ppb.

The compositions, methods and kits of the invention are also valuable in the purification of water which has been contaminated with cysts such as Giardia and *Cryptosporidium parvum* and wherein the cyst concentration is reduced by a factor of at least log 2, preferably at least log 3, and more preferably by a factor of at least log 3.5.

In a kit aspect, the present invention relates to a kit for purifying and clarifying contaminated drinking water and which comprises
(i) one or more unit doses of the water-purification composition herein, and
(ii) means for physically separating solid matter from drinking water.

The means for physically separating solid matter from drinking water includes cloth, paper and non-woven filters as described hereinabove.

The kits of the invention can additionally comprise one or more unit doses of a food additive or nutrient composition. The food additive or nutrient composition can be used with the water-purification composition either simultaneously or sequentially.

### DETAILED DESCRIPTION OF THE INVENTION

### Primary Coagulant

The inorganic metal salt is selected on the basis that it can act as a coagulant and can interact with charged water-soluble impurities in such a manner so as to neutralise the charge of said water-soluble impurity to form a water-insoluble impurity, usually to form a water-insoluble salt of said impurity, which precipitates out of solution. The inorganic salt can also lower the turbidity of the water by increasing the particle size of the water-insoluble impurities possibly causing sedimentation or facilitating the removal of these water-insoluble impurities by filtration or other water-insoluble matter removal techniques such as flotation or decanting. The inorganic salt selected herein, can also co-precipitate heavy metal ions out of water, and can also lower the total organic content present in the water by coagulating or adsorption of this organic content onto the water-insoluble impurities which have been formed in the water.

The term "inorganic metal salt" includes all poly-variations thereof such as polyferric material, but does not include compounds comprising methyl or ethyl groups. The inorganic metal salt is preferably free of carbon atoms. The term "inorganic metal salts which are free of carbon atoms" includes sources of inorganic metal salts which comprise minor amounts of carbon impurity such as often found in naturally occurring inorganic metal salt sources. For example, preferred inorganic metal salts of the composition of the invention comprise (by weight of said salt) less than 5%, more preferably less than 3%, more preferably less than 1%, even more preferably less than 0.1%, even more preferably less than 0.01% carbon atoms.

The composition herein preferably comprises (by weight) from 15%, or preferably from 20%, or preferably from 25%, and to 50%, or preferably to 40%, or preferably to 30% of iron sulphate.

### Coagulant Aid

The water purification composition herein comprises a polymeric, cationic coagulant aid (sometimes referred to herein as 'first polymeric material'). Highly preferred are polymeric materials which comprise an amine group. The first polymeric material is selected on the basis that it can aid the coagulation and flocculation process and in particular can in conjunction with the primary coagulant aid particle adherence and the aggregation of water-insoluble particles into larger water-insoluble aggregated complexes known as flocs. The first polymeric material may also adsorb or coagulate oils, fats and other organic or inorganic matter, and may sequester heavy metal ions.

The term "amine group" is defined herein as including primary amine groups, secondary amine groups, tertiary amine groups, quaternary amine groups such as quaternary ammonium groups, but the term "amine group" does not include amide groups. Said amine group can be the group linking the monomeric units of the backbone of the polymeric material, or may be present as a side group of the polymeric material, for example as an amine side group of a polysaccharide. Preferably the amine group is present as a side group.

Preferably, the polymeric material is substantially water-insoluble. "Substantially water-insoluble" is defined herein as having at least 10% by dry total weight of undissolved material present as determined by the following method:

1g material is added to 1 litre of distilled water at a pH of between 6.0 and 8.0, at 20°C and stirred vigorously for 24 hours. The water is then filtered through a 3 micrometer filter, and the undissolved material which is collected by the filter step is dried at 80°C until constant weight, typically for 24 to 48 hours. The weight of this undissolved material is then determined and the % dry weight of this undissolved material can be calculated.

The amine group of the first polymeric material is preferably at least partly protonated when the first polymeric material comes into contact with water, typically this protonation reaction occurs at a pH of below 9.0, and preferably at a pH of from 3 to 8. Thus, preferably the first polymeric material is cationic when in a solution of water at a pH of below 9. Alternatively, the amine group of the first polymeric material may already be in a charged state, for example a substituted or protonated state. The amine group of the first polymeric material may be a cationic quaternary ammonium group.

The first polymeric material preferably comprises a polysaccharide comprising an amine group. The first polymeric material may comprise a cationic starch, for example, cationic starch obtained from potato starch, waxy maize starch, corn starch, wheat starch and rice starch. More preferably, the first polymeric material comprises a polysaccharide which comprises an amine group which is bound directly to the monomer saccharide backbone unit of said polysaccharide. More preferably the first polymeric material comprises a polymer of glucosamine where all the monomer saccharide backbone units are connected in a linear conformation via beta-1-4-glycosidic bonds. More preferably, the first polymeric material comprises a modified chitin, such as chitosan, modified chitosan, or salts thereof. Most preferably the first polymeric material comprises chitosan or modified chitosan. The first polymeric material may be an impurity of chitin, and therefore, chitin may be a preferred source of first polymeric material for use herein.

Chitosan suitable for use herein is typically derived from the chitin of crustacea such as crabs, lobsters and shrimps. Chitosan derived from the chitin of fungi can also be used herein. The chitosan for use herein is typically found in the shells of crustacea and can be extracted by any technique known in the art, for example by using the extraction techniques described in US3533940, US3862122, US3922260 and US4195175.

The first polymeric material for use herein typically has an amine modification degree of at least 0.1, more preferably at least 0.2, or preferably at least 0.3, or preferably at least 0.4, or preferably at least 0.5, or preferably at least 0.6, or preferably at least 0.7, or preferably at least 0.8, or preferably at least 0.9, or preferably at least 1.0. Said modification degree is an indication of the amount of amine groups present in the polymeric material and is defined as the number ratio of the number of amine groups present in the polymeric material per monomer unit of the polymeric material.

Preferably, the first polymeric material has a weight average molecular weight of at least 10000, or preferably at least 25000, or preferably at least 50000, or preferably at least 75000, or preferably at least 100000.

The composition herein comprises (by weight) from 0.5%, or preferably from 1%, or preferably from 1.5%, or preferably from 2%, or preferably from 2.5%, and to 5%, or preferably to 4% first polymeric material.

### Bridging Flocculant

The composition also herein comprises a bridging flocculant (sometimes referred to herein as the second polymeric material). Preferably the second polymeric material is substantially water-soluble at in-use concentrations and has a weight average molecular weight of at least 2000000. The second polymeric material is selected on the basis that it can act as flocculant and cause the aggregation of water-insoluble particles into larger water-insoluble aggregated complexes known as flocs. It is believed that the ability of the second polymeric material to act as a flocculant, is due to the combination of its high molecular weight, structure, and water-solubility properties.

The second polymeric material is of greater molecular weight than the first polymeric material and preferably does not comprise an amine group. Preferably the second polymeric material comprises an amide group. More preferably the second polymeric material is a polyacrylamide. The second polymeric material is preferably not a cationic polyacrylamide, and preferably, the second polymeric material is not cationic.

The second polymeric material for use herein is nonionic or anionic, preferably anionic, more preferably the second polymeric material contains at least 0.02, or preferably at least 0.05, or preferably at least 0.1 anionic groups per monomer unit.

The second polymeric material for use herein is typically a polyacrylamide, especially preferred are anionic or nonionic polyacrylamides. Typical anionic and nonionic polyacrylamides for use herein are those from the Magnafloc range supplied by Ciba. Of these polyacrylamides, especially preferred are those known under the trade name as Magnafloc LT20, Magnafloc LT25, Magnafloc LT25S, Magnafloc LT26, Magnafloc LT28, Magnafloc 351 and Magnafloc 919.

It is preferred that a low amount of substantially water-soluble organic content is present in the composition herein. The term "low amount of substantially water-soluble content" can be determined by the following method:

500mg of said composition is added to 1 litre of deionised water which comprises no detectable amounts of substantially water-soluble organic content, to form a solution. Said solution is left with occasional stirring for 30 minutes and is then filtered through Whatman GF/C paper having an average pore size of 1.2 micrometers to obtain purified water. The level of total organic content (TOC) of said purified water is determined using the ISO method 8245:1999. A composition comprising "a substantially low amount of water-soluble content" is defined as a composition which gives a TOC of said purified water of less than 10ppm, preferably less than 7ppm, more preferably less than 4ppm when determined using this method.

It is also preferred that a low amount of substantially water-soluble organic content is obtained on use of the composition either in-vivo or on model surface water. For this purpose, 620 mg of the composition is added to 1 litre of in-vivo or model surface water respectively and the test repeated. Preferably, the TOC of the water after treatment is less than 10ppm, more preferably less than 7ppm, and especially less than 4ppm.

Preferably, the second polymeric material does not comprise a polysaccharide and more preferably the second polymeric material does not comprise a carboxymethyl cellulose or derivative thereof.

Preferably, the weight average molecular weight of the second polymeric material is at least 2500000, or preferably at least 3000000, or preferably at least 5000000, or preferably at least 7500000, or preferably at least 10000000, or preferably at least 15000000.

The composition herein comprises (by weight) from 0.4 or preferably from 0.5%, or preferably from 1%, and to 3% second polymeric material.

### Microbiocidal Disinfectant

The composition herein comprises a microbiocidal disinfectant (sometimes referred to herein as the disinfecting agent). The disinfecting agent may comprise any compound which disinfects or sanitises water. The disinfecting agent may be inorganic such as silver salts, colloidal silver, nanosilver, ozone, chlorine dioxide, chlorine, sodium hypochlorite or chloramine. The disinfecting agent may also be organic such as a quaternary ammonium compound. Preferred disinfecting agents include inorganic chlorine based disinfectants, wherein the chlorine is in a formal oxidation state that is not minus one, preferably above minus one. Preferred sources of chlorine comprise hypochlorites (especially calcium hypochlorite) and organic sources of chlorine such as isocyanurates. Other preferred disinfecting agents comprise iodine and sources of iodine such as polyiodide resins.

As previously discussed, the disinfecting agent is preferably used in a controlled, delayed, sustained or slow release form. Means for providing such controlled, delayed, sustained or slow release (hereafter 'means for providing delayed release') can include blending or coating the disinfecting agent with, for example, a poorly water-soluble or hydrophobic material, or providing a coating of sufficient thickness that the kinetics of dissolution of the coating provide delayed release. Poorly water-soluble or hydrophobic materials include waxes, paraffins, silicas, zeolites, clays, polymeric resins, celluloses, cross-linked polymers, insoluble salts such as calcium carbonate, etc. The coating material can be applied by agglomeration in, for example, pan, rotary drum and vertical blenders, or by spray atomization. Other means for providing delayed release include mechanical means for altering the physical properties of the disinfecting agent, for example, compaction, granulation means for altering the particle size distribution of the disinfecting agent, etc.

Highly preferred herein from the viewpoint of achieving optimum flocculation and disinfectancy performance in water contaminated with high levels of organic impurities is a particulate disinfecting agent, preferably calcium hypochlorite, having a particle size distribution such that at least about 50%, preferably at least about 75%, more preferably at least about 90% by weight is retained on a 210 µm (Tyler 65 mesh) screen, preferably on a 425 µm (35 mesh) screen, more preferably on a 600 µm (28 mesh) screen, yet more preferably on a 710 µm (24 mesh) screen, even more preferably on a 850 µm (20 mesh) screen, and especially on a 1000 µm (16 mesh) screen.

In order to minimise random sampling variance in the final unit dose composition, it is also preferred that the particulate disinfecting agent has a particle size distribution such that at least about 50%, preferably at least about 75% by weight thereof passes through a 2000 µm (9 mesh) screen and more preferably through a 1400 µm (12 mesh) screen.

The composition herein comprises (by weight) from 0.2%, or preferably from 0.5%, or preferably from 0.7%, or preferably from 1.0%, or preferably from 1.2%, or preferably from 1.5%, and to 10%, or preferably to 5%, or preferably to 4%, or preferably to 2.5% disinfecting agent.

### Water-Insoluble Silicate

The composition herein preferably comprises a water-insoluble silicate selected from clays, zeolites and mixtures thereof.

Highly preferred silicates for use herein are clays. The clay acts as a seed particle onto which water-insoluble impurities can aggregate to form flocs. The presence of clay in the composition improves the rate of floc formation and allows the formation of larger flocs compared to when clay is absent from the composition herein. The clay may also act as a swelling agent, and if the composition herein is in the form of a tablet, the clay improves the rate at which the tablet disintegrates on contact with water by swelling upon contact with water so that the components of the tablet are pushed apart by the swollen clay particles. The clay can also act as a desiccant within the tablet. The clay may also act as a cationic exchange agent to remove metal ions from the water and the clay can also remove colour, heavy metals and some organic material from water by adsorption.

The clay is preferably a smectite clay, preferably a dioctahedral smectite clay such as montmorillonite clay or a trioctahedral smectite clay such as hectorite clay. Those clays found in bentonite clay deposits are also preferred. Particularly preferred clays for use herein include laponite clay, hectorite, montmorillonite, nontronite, saponite, volkonsite, sauconite, beidellite, allevarlite, illite, halloysite and attapulgite. In compositions containing calcium hypochlorite, the free moisture content of the clay should be carefully controlled to provide acceptable disinfectant stability. Preferably the free moisture content should be less than about 4%, more preferably less than about 3%, especially less than about 2.5% and more especially less than about 1.5% by weight. Free moisture content is determined on a 2g sample of the test material following the procedure as described hereinabove.

Highly preferred for use herein from the viewpoint of providing optimum disinfectant stability are pre-dried clays which in their dessicated form have the potential to scavenge or pick up moisture. Such clays can be described in terms of their so-called 'water-capacity', defined herein as the equilibrium weight percentage of moisture picked up by a small sample (e.g. 10mg) of the dessicated material from air at 80% relative humidity and 20°C as measured by dynamic vapour sorption techniques. For example, if 10mg of the dessicated clay picks up 2mg moisture, the dessicated clay has a water capacity of 20%. Preferred for use herein are dessicated clays having a water capacity of at least about 10%, preferably at least about 15%, and more preferably at least about 18%.

The composition herein preferably comprises (by weight) from 1%, or preferably from 5%, or preferably from 10%, or preferably from 15%, or preferably from 20%, or preferably from 25%, and preferably to 80%, or preferably to 50%, or preferably to 35% clay.

Aluminosilicates may be used herein in place of, or in addition to, clay. The aluminosilicate can act as a cationic exchange agent to remove metal ions from water, and can also act as a seed particle to enhance floc formation and as dessicant for enhancing disinfectant stability. Preferred aluminosilicates for use herein include zeolite A, zeolite X, zeolite Y, zeolite P and zeolite beta. Preferably the free moisture content of the aluminosilcate should be less than about 4%, more preferably less than about 3%, especially less than about 2.5% and more especially less than about 1.5% by weight.

Highly preferred for use herein from the viewpoint of providing optimum disinfectant stability are pre-dried aluminosilicates which in their dessicated form have the potential to scavenge or pick up moisture. Such dessicated aluminosilicates can also be described in terms of their so-called 'water-capacity', as defined hereinabove. Preferred for use herein are dessicated aluminsilicates having a water capacity of at least about 10%, preferably at least about 15%, and more preferably at least about 18%.

The composition herein preferably comprises (by weight) from 1%, or preferably from 5%, or preferably from 10%, or preferably from 15%, or preferably from 20%, or preferably from 25%, and preferably to 80%, or preferably to 50%, or preferably to 35% aluminosilicate.

### A third polymeric material

The composition herein may comprise a third polymeric material. Said third polymeric material does not contain an amine group and is substantially water insoluble. The term "substantially water insoluble" is defined hereinbefore. Thus, the third polymeric material is different to, and is not, the first polymeric material or the second polymeric material. The third polymeric material is selected on the basis that it can act as a seed particle to enhance floc formation. The third polymeric material can be used in place of, or in addition to, clay or zeolite. Preferably the free moisture content of the third polymeric material should be less than about 4%, more preferably less than about 3%, especially less than about 2.5% and more especially less than about 1.5% by weight.

Preferably the third polymeric material comprises cellulose, more preferably the third polymeric material is an unmodified cellulose. Most preferably the third polymeric material comprises powdered cellulose.

The composition herein preferably comprises (by weight) from 1%, or preferably from 5%, or preferably from 10%, or preferably from 15%, or preferably from 20%, or preferably from 25%, and preferably to 80%, or preferably to 50%, or preferably to 35% third polymeric material.

### Alkali agent

The composition herein comprises an alkali agent. The alkali agent can be any water-soluble compound which gives alkalinity when contacted to water. The alkali agent for use herein is not a polymeric material. The composition herein preferably comprises an amount of alkali agent such that when the composition herein is contacted to water to form a solution, said solution has a pH of from 5 to 8, preferably from 6 to 7.

Preferred alkali agents are selected from the group consisting of sodium carbonate, sodium bicarbonate, sodium hydroxide, sodium oxide, calcium carbonate, calcium bicarbonate, calcium hydroxide, calcium oxide, potassium carbonate, potassium bicarbonate, potassium hydroxide, potassium oxide and combinations thereof.

Particular alkali agents which are a source of carbonate when contacted to water, for example sodium carbonate or sodium bicarbonate may be preferred for used herein. Since the composition herein comprises a source of acid, such as iron sulphate, said alkali agent which is a source of carbonate can interact with said acid source in the presence of water to produce a gas. This process is known as effervescence, and improves the rate at which the composition disperses, especially when the composition herein is in the form of a tablet.

Highly preferred herein, especially in compositions containing calcium hypochorite as disinfecting agent, are alkalis which can also act as moisture sinks, especially anhydrous sodium carbonate.

The composition herein typically comprises (by weight) from 10%, or preferably from 15%, or preferably from 20%, or preferably from 25%, and preferably to 45%, or preferably to 40%, or preferably to 35% alkali agent.

### Composition

The composition herein is preferably in a solid unit dose form, most preferably in a tablet or powder form. The composition herein is preferably packaged so that it is protected from environmental conditions such as moisture. Preferably the composition herein is packaged in a water impermeable material such as polypropylene or typical laminates. An example of one such laminate is a laminate supplied by Akerlund & Raus, comprising layers of coated paper (outer), LDPE, aluminium foil and an inner layer Surlyn (an ethylene/methacrylate co-polymer) - an FDA approved food packaging.

### Method for use

The composition herein can be used to purify water using a method comprising the steps of (a) contacting the composition herein to water to obtain partially purified water comprising solid matter; and (b) removing at least part of said solid matter from said partially purified water by; (i) filtration; or (ii) decanting; or (iii) sedimentation; or (iv) flotation; or (v) a combination thereof, to obtain purified water.

The composition herein can be in the form of a tablet or solid powder which is added to water, typically to form partially purified water comprising solid matter such as flocs. This solid matter can be removed or separated from the remaining part of the partially purified water by any technique, typically by filtration but decanting, sedimentation and flotation may also be used. By filtration it is meant passing the partially purified water through a filter. Filtration can occur by pouring means, for example by pouring said partially purified water through a filter to remove at least part of the solid matter from said partially purified water. Filtration can also occur by centripetal force means, for example by total enclosing the partially purified water by a filter and spinning said partially purified water and said filter so that said partially purified water passes through said filter and at least part of said solid matter is separated from said partially purified water. Filtration can also occur by plunging means, for example by plunging or moving a filter through said partially purified water so that at least part of said solid matter is separated from said partially purified water.

Filters typically used include cloth filters, non-woven and paper filters and polishing filters, such as filters comprising activated carbon, glass fibre, zeolite, ion exchange media, or a combination thereof, which remove residual water-impurities, e.g. organic matter, heavy metal ions and residual disinfectant from the water. Filters suitable for use may be impregnated with silver or other biostatic components so that bacteria cannot grow on said filter and the filter can be reused several times without contaminating the water being filtered. Sand filters can also be used, and more than one filter may be used in combination herein.

Preferably, from 10mg, or preferably from 50mg, or preferably from 75mg, or preferably from 100mg, or preferably from 150mg, or preferably from 200mg, or preferably from 250mg, or preferably from 300mg, and preferably to 2000mg, or preferably to 1000mg, or preferably to 750mg of composition herein is added to 1 litre of water. The amount of composition herein which is added to the water depends on the impurity of said water. For example, less composition is needed to adequately purify water which is not very impure compared to the amount of composition herein which is needed to purify very impure water.

### Example

The following are compositions according to the invention. All percentages are by weight of composition.

| | A % | B % | C % | D % | E % | F % |
|---|---|---|---|---|---|---|
| Chitosan | 1.7 | | 1.3 | 1 | | 1.8 |
| Cationic modified potato starch | | 1.5 | | | 1 | |
| Magnafloc LT20 | | | 0.5 | | | |
| Magnafloc LT25 | 1.5 | | | | | 0.9 |
| Magnafloc LT28 | | 1.3 | | 1 | 1.5 | |
| Iron III sulphate | 33 | 25 | 30 | 37 | 29 | 30 |
| Calcium hypochlorite | 0.8 | 1.5 | 0.5 | 1.2 | 1.5 | 0.9 |
| Hectorite clay | | 35 | | | | 40 |
| Montmorillonite clay | 32 | | | 27 | 45 | |
| Zeolite X | | 12 | 40 | | | |
| Sodium carbonate | 31 | 23 | 27 | 32 | 22 | 25 |
| Sodium fluoride | | | | | | 1 |
| Miscellaneous | to 100 | to 100 | to 100 | to 100 | to 100 | to 100 |

In the above, the calcium hypochlorite was added in granular form comprising particles of about 1212µm median particle size with less than 25% by weight larger than 1400µm, less than 0.5% by weight larger than 2000µm and less than 3% by weight smaller than 150µm. The free moisture content of the compositions was in the range from 1% to 4%. The hectorite clay, montmorillonite clay and zeolite X were all predried to a free moisture content below 1.5% by weight and had a water capacity in excess of 18%. The compositions have a tₘₐₓ of at least about 8 minutes and a t₈₀ of less than about 30 seconds. 6.2g of compositions L to V were added in powder form from unit dose polypropylene sachets to 10 litres of water. The water was then agitated or stirred briefly. The water was left to stand for 5 minutes, after which said water was stirred or agitated for a further minute, left to stand for a further five minutes, after which said water was stirred or agitated for a further minute and then left to stand for another 5 minutes. During this time, water-insoluble flocs formed in the water. The liquid was then filtered through a cotton cloth or non-woven filter to remove said water-insoluble flocs, and the filtrate was collected. The filtrate was left for a further 15 minutes and is purified water.

## Claims

1. A composition in unit dosage form for the batchwise purification and clarification of from 0.1 to 100 litres of contaminated drinking water at a dosage of from 50 to 2000 mg/litre of contaminated drinking water; the composition comprising:
a) from 15% to 50% iron (III) sulfate as a primary coagulant;
b) from 0.4% to 3% of a bridging flocculant selected from water-soluble and water-dispersible anionic and nonionic polymers having a weight average molecular weight of at least 2,000,000, and mixtures thereof, wherein the weight ratio of primary coagulant to bridging flocculant is from 10:1 to 200:1;
c) from 0.5% to 5% of a coagulant aid selected from water-soluble and water-dispersible cationic polymers having a weight average molecular weight of less than 1,500,000, and mixtures thereof;
d) a water-soluble alkali wherein the weight ratio of primary coagulant to water-soluble alkali is from 0.8:1 to 3:1; and
e) from 0.2% to 10% of a microbiocidal disinfectant.

2. A composition according to Claim 1 further comprising one or more of
a) a water-insoluble silicate selected from clays, zeolites and mixtures thereof; and
b) a food additive or nutrient source.

3. A composition according to any preceding claim wherein the weight ratio of primary coagulant to coagulant aid is from 8:1 to 100:1.

4. A composition according to any preceding claim wherein the weight ratio of coagulant aid to bridging flocculant is in the range from 10:1 to 1:6.

5. A composition according to any preceding claim wherein the weight ratio of primary coagulant to microbiocidal disinfectant is from 10:1 to 100:1.

6. A composition according to any preceding claim wherein the weight ratio of primary coagulant to water-soluble alkali is from 0.9:1 to 2.4:1, preferably from 1:1 to 2:1.

7. A composition according to Claim 2 comprising a water-insoluble silicate, wherein the weight ratio of primary coagulant to water-insoluble silicate is from 0.3:1 to 5:1.

8. A composition according to any preceding claim comprising from 25% to 40% by weight of the primary coagulant.

9. A composition according to any preceding claim comprising from 1% to 4% by weight of the coagulant aid.

10. A composition according to any preceding claim comprising from 0.5% to 4%, preferably from 0.7% to 2.5% by weight of the microbiocidal disinfectant.

11. A composition according to any preceding claim comprising from 10% to 45%, preferably from 15% to 40%, more preferably from 20% to 35% by weight of water-soluble alkali.

12. A composition according to any preceding claim comprising from 20% to 50%, preferably from 25% to 35% by weight of water-insoluble silicate.

13. A composition according to Claim 1 for the batchwise purification and clarification of from 0.5 to 40 litres of contaminated drinking water at a dosage of from 250 to 1000, preferably from 250 to 750 mg/litre of contaminated drinking water.

14. A composition according to any preceding claim wherein the microbiocidal disinfectant is in controlled, delayed, sustained or slow release form whereby the composition has a tₘₐₓ corresponding to the time for achieving maximum disinfectant concentration after addition to deionized water at 20°C of at least 1 minute, preferably at least 2 minutes, more preferably at least 4 minutes, and especially at least 8 minutes.

15. A composition according to any preceding claim wherein the coagulant aid is a substantially water-insoluble cationic polysaccharide, preferably chitosan.

16. A composition according to any preceding claim wherein the microbiocidal disinfectant is a chlorine-based disinfectant, especially calcium hypochlorite.

17. A composition according to any preceding claim additionally comprising a moisture sink and having a free-moisture content of less than 6% by weight, the moisture sink preferably having a free moisture content of less 3% by weight and preferably being selected from pre-dried clays and aluminosilicates, anhydrous sodium carbonate and mixtures thereof.

18. A method for purifying and clarifying contaminated drinking water and which comprises contacting the contaminated water with the composition of any of Claims 1 to 17.

19. A method according to Claim 18 comprising:
a) a coagulation and flocculation stage in which the contaminated drinking water is brought into mixing contact with the coagulant, bridging flocculant and the coagulant aid so as to coagulate and flocculate the water impurities in the form of solid matter;
b) a disinfectant stage in which the drinking water is brought into microbiocidal contact with the disinfectant during or after substantial completion of the coagulation and flocculation stage;
c) a separation stage prior or subsequent to the disinfectant stage in which the solid matter is physically separated from the drinking water; and optionally one or more of
d) a neutralization stage in which the drinking water is brought into contact with a disinfectant neutralization agent subsequent to said separation stage in order to reduce or remove excess disinfectant; and
e) a nutrifying stage in which the drinking water is brought into contact with the food additive or nutrient source prior or subsequent to the separation stage.

20. A method according to Claim 18 or Claim 19 for purifying water contaminated with arsenic and/or lead and wherein the purified water has an arsenic concentration below 5 ppb, preferably below 2 ppb and a lead concentration below 15 ppb, preferably below 10 ppb.

21. A method according to any of Claims 18 to 20 for purifying water contaminated with soluble organic impurities such as humic acid and wherein the purified water has a total organic content below 10 ppm, preferably below 7 ppm and more preferably below 4 ppm and a trihalomethane (THM) level below 100 ppb, preferably below 70 ppb, more preferably below 40 ppb.

22. A method according to any of Claims 18 to 21 for purifying water contaminated with cysts such as *Cryptosporidium parvum* and wherein the cyst concentration is reduced by a factor of at least log2, preferably at least log 3, and more preferably at least log 3.5.

23. A method according to any of Claims 18 to 22 in which the volume of contaminated drinking water treated according to the method is in the range from 0.1 to 100, preferably from 0.5 to 20, more preferably from 5 to 15, and especially from 8 to 13 litres.

24. A method according to any of Claims 18 to 23 comprising a separation stage using a paper, non-woven or cloth filtration element and wherein preferably separation is accomplished in a single filtration step without change of the filtration element.

25. A kit for purifying and clarifying contaminated drinking water and which comprises
a) one or more unit doses of a composition according to any of Claims 1 to 17, and
b) means for physically separating solid matter from drinking water.

26. A kit according to Claim 25 which additionally comprises one or more unit doses of a food additive or nutrient composition.

## Patentansprüche

1. Zusammensetzung in Einheitsdosisform für die diskontinuierliche Reinigung und Klärung von 0,1 bis 100 Liter kontaminiertem Trinkwasser mit einer Dosierung von 50 bis 2000 mg/Liter kontaminiertem Trinkwasser; wobei die Zusammensetzung umfasst:
a) 15 % bis 50 % Eisen(III)-sulfat als primäres Koagulierungsmittel;
b) 0,4 % bis 3 % verbrückendes Flockungsmittel, das ausgewählt ist aus wasserlöslichen und in Wasser dispergierbaren anionischen und nichtionischen Polymeren mit einem Gewichtsmittel des Molekulargewichts von mindestens 2.000.000 und Mischungen davon, wobei das Gewichtsverhältnis von primärem Koagulierungsmittel zu verbrückendem Flockungsmittel 10:1 bis 200:1 ist;
c) 0,5 % bis 5 % Koagulierungshilfsmittel, das ausgewählt ist aus wasserlöslichen und in Wasser dispergierbaren Polymeren mit einem Gewichtsmittel des Molekulargewichts von weniger als 1.500.000 und Mischungen davon;
d) ein wasserlösliches Alkali, wobei das Gewichtsverhältnis von primärem Koagulierungsmittel zu wasserlöslichem Alkali bei 0,8:1 bis 3:1 liegt; und
e) 0,2 % bis 10 % mikrobiozides Desinfektionsmittel.

2. Zusammensetzung nach Anspruch 1, ferner einen oder mehrere der folgenden Bestandteile umfassend:
a) ein wasserunlösliches Silicat, das ausgewählt ist aus Tonen, Zeolithen und Mischungen davon; und
b) einen Nährstoffzusatz oder eine Nährstoffquelle.

3. Zusammensetzung nach einem der vorangehenden Ansprüche, wobei das Gewichtsverhältnis von primärem Koagulierungsmittel zu Koagulierungshilfsmittel bei 8:1 bis 100:1 liegt.

4. Zusammensetzung nach einem der vorangehenden Ansprüche, wobei das Gewichtsverhältnis Koagulierungshilfsmittel zu verbrückendem Flockungsmittel im Bereich von 10:1 bis 1:6 liegt.

5. Zusammensetzung nach einem der vorangehenden Ansprüche, wobei das Gewichtsverhältnis von primärem Koagulierungsmittel zu mikrobiozidem Desinfektionsmittel bei 10:1 bis 100:1 liegt.

6. Zusammensetzung nach einem der vorangehenden Ansprüche, wobei das Gewichtsverhältnis von primärem Koagulierungsmittel zu wasserlöslichem Alkali bei 0,9:1 bis 2,4:1, vorzugsweise bei 1:1 bis 2:1 liegt.

7. Zusammensetzung nach Anspruch 2, ein wasserunlösliches Silicat umfassend, wobei das Gewichtsverhältnis von primärem Koagulierungsmittel zu wasserunlöslichem Silicat bei 0,3:1 bis 5:1 liegt.

8. Zusammensetzung nach einem der vorangehenden Ansprüche, 25 Gew.-% bis 40 Gew.-% primäres Koagulierungsmittel umfassend.

9. Zusammensetzung nach einem der vorangehenden Ansprüche, 1 Gew.-% bis 4 Gew.-% Koagulierungshilfsmittel umfassend.

10. Zusammensetzung nach einem der vorangehenden Ansprüche, 0,5 Gew.-% bis 4 Gew.-%, vorzugsweise 0,7 Gew.-% bis 2,5 Gew.-% mikrobiozides Desinfektionsmittel umfassend.

11. Zusammensetzung nach einem der vorangehenden Ansprüche, 10 Gew.-% bis 45 Gew.-%, vorzugsweise 15 Gew.-% bis 40 Gew.-%, stärker bevorzugt 20 Gew.-% bis 35 Gew.-% wasserlösliches Alkali umfassend.

12. Zusammensetzung nach einem der vorangehenden Ansprüche, 20 Gew.-% bis 50 Gew.-%, vorzugsweise 25 Gew.-% bis 35 Gew.-% wasserunlösliches Silicat umfassend.

13. Zusammensetzung nach Anspruch 1 für die diskontinuierliche Reinigung und Klärung von 0,5 bis 40 Liter kontaminiertem Trinkwasser mit einer Dosierung von 250 bis 1000, vorzugsweise 250 bis 750 mg/Liter kontaminiertem Trinkwasser.

14. Zusammensetzung nach einem der vorangehenden Ansprüche, wobei das mikrobiozide Desinfektionsmittel in gesteuerter, verzögerter, nachhaltiger oder langsamer Freisetzungsform vorliegt, so dass die Zusammensetzung eine tₘₐₓ, die der Zeit bis zum Erreichen einer maximalen Desinfektionsmittelkonzentration nach Zugabe von entionisiertem Wasser bei 20 °C entspricht, von mindestens 1 Minute, vorzugsweise mindestens 2 Minuten, stärker bevorzugt mindestens 4 Minuten und insbesondere mindestens 8 Minuten aufweist.

15. Zusammensetzung nach einem der vorangehenden Ansprüche, wobei das Koagulierungshilfsmittel ein im Wesentlichen wasserunlösliches kationisches Polysaccharid, vorzugsweise Chitosan ist.

16. Zusammensetzung nach einem der vorangehenden Ansprüche, wobei das mikrobiozide Desinfektionsmittel ein Desinfektionsmittel auf Chlorbasis, insbesondere Calciumhypochlorit ist.

17. Zusammensetzung nach einem der vorangehenden Ansprüche, außerdem eine Feuchtigkeitsableitung umfassend und einen Gehalt an freier Feuchtigkeit von weniger als 6 Gew.-% aufweisend, wobei die Feuchtigkeitsableitung vorzugsweise einen Gehalt an freier Feuchtigkeit von weniger als 3 Gew.-% aufweist und vorzugsweise ausgewählt ist aus vorgetrockneten Tonen und Aluminosilicaten, wasserfreiem Natriumcarbonat und Mischungen davon.

18. Verfahren zum Reinigen und Klären von kontaminiertem Trinkwasser, außerdem das Inkontaktbringen des kontaminierten Trinkwassers mit der Zusammensetzung nach einem der Ansprüche 1 bis 17 umfassend.

19. Verfahren nach Anspruch 18, das ferner Folgendes umfasst:
a) einen Koagulierungs- und Ausflockungsschritt, in dem das kontaminierte Trinkwasser durch Mischen mit dem Koagulierungsmittel, dem verbrückenden Flockenbildungsmittel und dem Koagulierungshilfsmittel in Kontakt gebracht wird, um die im Wasser enthaltenen Verunreinigungen in Form von Feststoffen zu koagulieren und auszuflocken;
b) einen Desinfizierungsschritt, in dem das Trinkwasser während oder nach einem weitgehenden Abschluss des Koagulierungs- und Ausflockungsschritts mit dem Desinfektionsmittel in mikrobioziden Kontakt gebracht wird;
c) einen Trennungsschritt vor oder nach dem Desinfektionsschritt, in dem die Feststoffe physikalisch vom Trinkwasser getrennt werden; und optional einen oder mehreren der folgenden Schritte:
d) einen Neutralisierungsschritt, in dem das Trinkwasser nach dem Trennungsschritt mit Desinfektionsmittel-neutralisierendem Mittel in Kontakt gebracht wird, um überschüssiges Desinfektionsmittel zu verringern oder zu entfernen; und
e) einen Nährstoffzugabeschritt, in dem das Trinkwasser vor oder nach dem Trennungsschritt mit dem Nährstoffzusatz oder der Nährstoffquelle in Kontakt gebracht wird.

20. Verfahren nach Anspruch 18 oder Anspruch 19 zum Reinigen von Wasser, das mit Arsen und/oder Blei kontaminiert ist, und wobei das gereinigte Wasser eine Arsenkonzentration unter 5 ppb, vorzugsweise unter 2 ppb, und eine Bleikonzentration unter 15 ppb, vorzugsweise unter 10 ppb aufweist.

21. Verfahren nach einem der Ansprüche 18 bis 20 zum Reinigen von Wasser, das mit löslichen organischen Verunreinigungen, wie Huminsäure, kontaminiert ist, und wobei das gereinigte Wasser einen Gesamtgehalt an organischen Stoffen von unter 10 ppm, vorzugsweise unter 7 ppm und stärker bevorzugt unter 4 ppm und einen Trihalomethan (THM)-Gehalt unter 100 ppb, vorzugsweise unter 70 ppb, stärker bevorzugt unter 40 ppb aufweist.

22. Verfahren nach einem der Ansprüche 18 bis 21 zum Reinigen von Wasser, das mit Zysten, wie *Cryptosporidium parvum*, kontaminiert ist, wobei die Zystenkonzentration um einen Faktor von mindestens log2, vorzugsweise mindestens log3 und stärker bevorzugt mindestens log 3,5 verringert ist.

23. Verfahren nach einem der Ansprüche 18 bis 22, wobei das Volumen an kontaminiertem Trinkwasser, das gemäß dem Verfahren behandelt wird, im Bereich von 0,1 bis 100, vorzugsweise 0,5 bis 20, stärker bevorzugt 5 bis 15, und insbesondere 8 bis 13 Liter liegt.

24. Verfahren nach einem der Ansprüche 18 bis 23, einen Trennungsschritt unter Verwendung eines Filtrationselements aus Papier, Vlies oder Tuch umfassend, und wobei die Trennung in einem einzigen Filtrationsschritt, ohne Austausch des Filtrationselements, durchgeführt wird.

25. Kit zum Reinigen und Klären von kontaminiertem Trinkwasser, umfassend:
a) eine oder mehrere Einheitsdosen einer Zusammensetzung nach einem der Ansprüche 1 bis 17 und
b) Mittel zum physikalischen Trennen von Feststoffen von Trinkwasser.

26. Kit nach Anspruch 25, das außerdem eine oder mehrere Einheitsdosen eines Nährstoffzusatzes oder einer Nährstoffzusammensetzung umfasst.

## Revendications

1. Composition sous forme de dosage unitaire pour la purification et la clarification par lot de 0,1 à 100 litres d'eau potable contaminée à un dosage allant de 50 à 2000 mg/litre d'eau potable contaminée ; la composition comprenant :
a) de 15 % à 50 % de sulfate de fer (III) en tant que coagulant primaire ;
b) de 0,4 % à 3 % d'un floculant de pontage choisi parmi les polymères anioniques et non ioniques hydrosolubles et hydrodispersibles ayant une masse moléculaire moyenne en poids d'au moins 2 000 000, et leurs mélanges, dans laquelle le rapport pondéral de coagulant primaire sur floculant de pontage va de 10:1 à 200:1 ;
c) de 0,5 % à 5 % d'un auxiliaire de coagulation choisi parmi les polymères cationiques hydrosolubles et hydrodispersibles ayant une masse moléculaire moyenne en poids de moins de 1 500 000, et leurs mélanges ;
d) un alcali hydrosoluble dans lequel le rapport pondéral de coagulant primaire sur alcali hydrosoluble va de 0,8:1 à 3:1 ; et
e) de 0,2 % à 10 % d'un désinfectant microbiocide.

2. Composition selon la revendication 1, comprenant en outre un ou plusieurs parmi
a) un silicate insoluble dans l'eau choisi parmi les argiles, les zéolites et leurs mélanges ; et
b) une source d'additifs alimentaires ou de nutriments.

3. Composition selon l'une quelconque des revendications précédentes, dans laquelle le rapport pondéral de coagulant primaire sur auxiliaire de coagulation va de 8:1 à 100:1.

4. Composition selon l'une quelconque des revendications précédentes, dans laquelle le rapport pondéral d'auxiliaire de coagulation sur floculant de pontage est dans l'intervalle de 10:1 à 1:6.

5. Composition selon l'une quelconque des revendications précédentes, dans laquelle le rapport pondéral de coagulant primaire sur désinfectant microbiocide va de 10:1 à 100:1.

6. Composition selon l'une quelconque des revendications précédentes, dans laquelle le rapport pondéral de coagulant primaire sur alcali hydrosoluble va de 0,9:1 à 2,4:1, de préférence de 1:1 à 2:1.

7. Composition selon la revendication 2, comprenant un silicate insoluble dans l'eau, dans laquelle le rapport pondéral de coagulant primaire sur silicate insoluble dans l'eau va de 0,3:1 à 5:1.

8. Composition selon l'une quelconque des revendications précédentes, comprenant de 25 % à 40 % en poids du coagulant primaire.

9. Composition selon l'une quelconque des revendications précédentes, comprenant de 1 % à 4 % en poids de l'auxiliaire de coagulation.

10. Composition selon l'une quelconque des revendications précédentes, comprenant de 0,5 % à 4 %, de préférence de 0,7 % à 2,5 % en poids du désinfectant microbiocide.

11. Composition selon l'une quelconque des revendications précédentes, comprenant de 10 % à 45 %, de préférence de 15 % à 40 %, plus préférablement de 20 % à 35 % en poids d'alcali hydrosoluble.

12. Composition selon l'une quelconque des revendications précédentes, comprenant de 20 % à 50 %, de préférence de 25 % à 35 % en poids de silicate insoluble dans l'eau.

13. Composition selon la revendication 1, pour la purification et la clarification par lot de 0,5 à 40 litres d'eau potable contaminée à un dosage allant de 250 à 1000, de préférence de 250 à 750 mg/litre d'eau potable contaminée.

14. Composition selon l'une quelconque des revendications précédentes, dans laquelle le désinfectant microbiocide est sous une forme à libération contrôlée, retardée, prolongée ou lente moyennant quoi la composition a un tₘₐₓ correspondant au temps pour obtenir la concentration maximale en désinfectant après addition à de l'eau désionisée à 20 °C d'au moins 1 minute, de préférence au moins 2 minutes, plus préférablement au moins 4 minutes, et spécialement au moins 8 minutes.

15. Composition selon l'une quelconque des revendications précédentes, dans laquelle l'auxiliaire de coagulation est un polysaccharide cationique essentiellement insoluble dans l'eau, de préférence du chitosan.

16. Composition selon l'une quelconque des revendications précédentes, dans laquelle le désinfectant microbiocide est un désinfectant à base de chlore, spécialement de l'hypochlorite de calcium.

17. Composition selon l'une quelconque des revendications précédentes comprenant en outre un puits d'humidité et ayant une teneur en humidité libre de moins de 6 % en poids, le puits d'humidité ayant de préférence une teneur en humidité libre de moins de 3 % en poids et étant de préférence choisi parmi les argiles et aluminosilicates pré-séchés, le carbonate de sodium anhydre et leurs mélanges.

18. Procédé pour purifier et clarifier de l'eau potable contaminée et qui comprend la mise en contact de l'eau contaminée avec la composition selon l'une quelconque des revendications 1 à 17.

19. Procédé selon la revendication 18 comprenant :
a) une phase de coagulation et de floculation dans laquelle l'eau potable contaminée est amenée en contact mélangeant avec le coagulant, le floculant de pontage et l'auxiliaire de coagulation de façon à coaguler et floculer les impuretés de l'eau sous la forme de matière solide ;
b) une phase de désinfection dans laquelle l'eau potable est amenée en contact microbiocide avec le désinfectant durant ou après achèvement substantiel de la phase de coagulation et de floculation ;
c) une phase de séparation avant ou après la phase de désinfection dans laquelle la matière solide est séparée physiquement de l'eau potable ; et facultativement une ou plusieurs parmi
d) une phase de neutralisation dans laquelle l'eau potable est amenée en contact avec un agent de neutralisation désinfectant après ladite phase de séparation afin de réduire ou éliminer le désinfectant en excès ; et
e) une phase d'apport de nutriments dans laquelle l'eau potable est amenée en contact avec la source d'additifs alimentaires ou de nutriments avant ou après la phase de séparation.

20. Procédé selon la revendication 18 ou la revendication 19, pour purifier de l'eau contaminée avec de l'arsenic et/ou du plomb et dans lequel l'eau purifiée a une concentration en arsenic inférieure à 5 parties par milliard, de préférence inférieure à 2 parties par milliard et une concentration en plomb inférieure à 15 parties par milliard, de préférence inférieure à 10 parties par milliard.

21. Procédé selon l'une quelconque des revendications 18 à 20 pour purifier de l'eau contaminée avec des impuretés organiques solubles telles que l'acide humique et dans lequel l'eau purifiée a une teneur totale en matières organiques inférieure à 10 ppm, de préférence inférieure à 7 ppm et plus préférablement inférieure à 4 ppm et un taux de trihalométhane (THM) inférieur à 100 parties par milliard, de préférence inférieur à 70 parties par milliard, plus préférablement inférieur à 40 parties par milliard.

22. Procédé selon l'une quelconque des revendications 18 à 21, pour purifier de l'eau contaminée avec des spores tels que Cryptosporidium parvum et dans lequel la concentration en spores est réduite d'un facteur d'au moins log 2, de préférence au moins log 3, et plus préférablement au moins log 3,5.

23. Procédé selon l'une quelconque des revendications 18 à 22, dans lequel le volume d'eau potable contaminée traitée selon le procédé est dans l'intervalle allant de 0,1 à 100, de préférence de 0,5 à 20, plus préférablement de 5 à 15, et spécialement de 8 à 13 litres.

24. Procédé selon l'une quelconque des revendications 18 à 23 comprenant une phase de séparation en utilisant un élément de filtration de type papier, non-tissé ou tissu et dans lequel de préférence la séparation est accomplie en une seule étape de filtration sans changement de l'élément de filtration.

25. Trousse pour purifier et clarifier de l'eau potable contaminée et qui comprend
a) une ou plusieurs doses unitaires d'une composition selon l'une quelconque des revendications 1 à 17, et
b) des moyens pour séparer physiquement la matière solide de l'eau potable.

26. Trousse selon la revendication 25, qui comprend en outre une ou plusieurs doses unitaires d'un additif alimentaire ou d'une composition de nutriments.
